Europäisches Patentamt

European Patent Office

Office européen des brevets

(19)

(11) Veröffentlichungsnummer: **0 269 919**
**A2**

(12) # EUROPÄISCHE PATENTANMELDUNG

(21) Anmeldenummer: 87116560.1

(22) Anmeldetag: 10.11.87

(51) Int. Cl.4: **G10K 15/04** , G01V 1/02

(30) Priorität: 04.12.86 DE 3641430

(43) Veröffentlichungstag der Anmeldung:
08.06.88 Patentblatt 88/23

(84) Benannte Vertragsstaaten:
**DE FR GB IT NL SE**

(71) Anmelder: **Fried. Krupp Gesellschaft mit
beschränkter Haftung
Altendorfer Strasse 103
D-4300 Essen 1(DE)**

(72) Erfinder: **Arens, Egidius, Dipl.-Ing.
Cordstrasse 13
D-2807 Achim(DE)**
Erfinder: **Rehbock, Alfred, Dipl.-Ing.
Eislebener Strasse 21
D-2800 Bremen 41(DE)**

(54) **Elektroakustischer Wandler für Wasserschall.**

(57) Ein breitbandiger elektroakustischer Tieffrequenzwandler weist zwei unter Zwischenlage einer
elastischen Zwischenschicht aus druckfestem, weichen Werkstoff aufeinanderliegende Platten aus
ferromagnetischem Material auf. Mindestens eine
der Platten trägt auf ihrer der Zwischenschicht zugekehrten Plattenfläche eine Vielzahl von im Abstand
voneinander angeordneten parallelen Nuten. In den
Nuten liegt eine Erregerwicklung derart ein, daß die
Stromrichtung des in der Erregerwicklung fließenden
Erregerstroms in benachbarten Nuten entgegengesetzt verläuft.

EP 0 269 919 A2

## Elektroakustischer Wandler für Wasserschall

Die Erfindung betrifft einen elektroakustischen Wandler für Wasserschall, insbesondere einen Sendewandler.

In der Sonartechnik werden zum Aussenden und Empfangen von Wasserschall üblicherweise piezoelektrische oder magnetostriktive Wandler verwendet, die in einer Vielzahl räumlich zu einer Sende-/oder Empfangsbasis, der sog. Sonarbasis, zusammengefaßt sind. Die räumliche Anordnung kann dabei in einer Ebene (Flachbasis), auf einem Zylindermantel (Zylinderbasis) oder in einer Kette (Schleppantenne) erfolgen. Solche Sonarbasen arbeiten als Aktivanlagen im Sendebetrieb innerhalb eines Frequenzbereiches von etwa 5 kHz bis etwa 100 kHz.

In jüngster Zeit tritt zunehmend der Wunsch nach breitbandigen Tieffrequenzsendern im Frequenzbereich von etwa 100 Hz bis etwa 1 kHz auf, die große akustische Sendeleistungen bei gutem Wirkungsgrad zu erzeugen vermögen und weitgehend unempfindlich gegen Wasserdruck auch in größeren Tiefen sind. Solche Tieffrequenzsender können mit herkömmlichen Sonarbasen nicht realisiert werden, da die piezoelektrischen oder magnetostriktiven Wandler in ihrer Schwingungsamplitude begrenzt sind, zur Erzielung eines brauchbaren Schallpegels aber mit abnehmender Frequenz die Schwingungsamplitude vergrößert werden muß.

In der Explorationstechnik erzeugt man tieffrequente Wasserschallimpulse mit hohem Schallpegel durch Sprengstoff oder Luft-und Wasserpulser (Air-und Waterguns).

Der Erfindung liegt die Aufgabe zugrunde, einen für den Einsatz in der Sonartechnik geeigneten breitbandigen elektroakustischen Tieffrequenzwandler zu schaffen, der in seiner Verwendung als Sendewandler einen großen akustischen Sendepegel bei erträglicher elektrischer Ansteuerleistung erzeugt.

Die Aufgabe ist bei einem elektroakustischen Wandler für Wasserschall durch die Merkmale im Kennzeichenteil des Anspruchs 1 gelöst.

Bei dem erfindungsgemäßen Wandler wird durch die zwischen den beiden Eisenplatten bei Stromfluß in der Erregerwicklung entstehenden starken Kräfte die Zwischenschicht komprimiert und damit eine großflächige Volumenänderung erzeugt, so daß bei Wechselstromerregung Schall mit hohem Schallpegel in Richtung der Flächennormalen beider Eisenplatten abgestrahlt wird. Eine überschlägige Abschätzung läßt erwarten, daß bei einer Plattenfläche von ungefähr 3 m × 0,5 m = 1,5 m² und einer Sendefrequenz von 500 Hz ein Schallpegel von 230 dB rel 1 μPa, 1 m mit etwa 100 kW elektrischer Leistung erzeugt werden kann. Hierzu sind eine Wechselspannung von ca. 700 V und ein Wechselstrom von ca. 140 A erforderlich.

Der erfindungsgemäße Wandler ist konstruktiv äußerst einfach aufgebaut, robust und druckfest. Er hat einen niedrigen Innenwiderstand und damit geringe elektrische Verluste, aber auch extrem kleine Magnetfeldverluste, weil die Magnetwege kurz und die magnetische Aussteuerung trotz der erzeugten großen Magnetkräfte klein bleibt. Die Verlustleistungen lassen sich wegen der Großflächigkeit des Wandlers sehr gut abführen. Durch Art und Dicke der verwendeten Zwischenschicht ist eine sehr gute Anpassung an die Impedanz des Wassers möglich.

Zu beachten ist, daß bei dem erfindungsgemäßen Wandler der Schalldruck proportional dem Quadrat des Stromes ist, was bedeutet, daß bei Ansteuerung der Erregerwicklung mit einer Wechselstromfrequenz f eine Schallfrequenz von 2 f abgestrahlt wird. Dieser Effekt läßt sich jedoch ohne weiteres durch eine geeignete Ansteuerung kompensieren.

Eine vorteilhafte Ausführungsform der Erfindung ergibt sich aus Anspruch 3. Durch die Einschichtwicklung können die Nuten sehr flach und schmal ausgebildet werden, wodurch die Magnetwege minimiert werden, damit die Magnetfeldverluste und die Ansteuerleistung gering gehalten werden.

Der erfindungsgemäße Wandler kann als Flachbasis oder als Schleppantenne mit recht brauchbarer Richtcharakteristik für eine Sonaranlage verwendet werden oder die Elemente einer zusammengesetzten Basis, einem sog. Array, einer Sonaranlage bilden.

Die Erfindung ist anhand von in der Zeichnung dargestellten Ausführungsbeispielen im folgenden näher beschrieben. Es zeigen jeweils in schematischer Darstellung

Fig. 1 einen Querschnitt eines Sendewandlers für eine Sonaranlage,

Fig. 2 eine Unteransicht einer Rückschlußplatte des Sendewandlers in Fig. 1,

Fig. 3 einen Querschnitt eines Sendewandlers gemäß einem zweiten Ausführungsbeispiel,

Fig. 4 eine Unteransicht der Rückschlußplatte von zu einer Sendebasis zusammengesetzten Sendewandlern gemäß Fig. 1 oder 2.

Fig. 5 eine perspektivische Ansicht des Sendewandlers in Fig. 1 oder 2 in seiner Ausbildung als Schleppantenne.

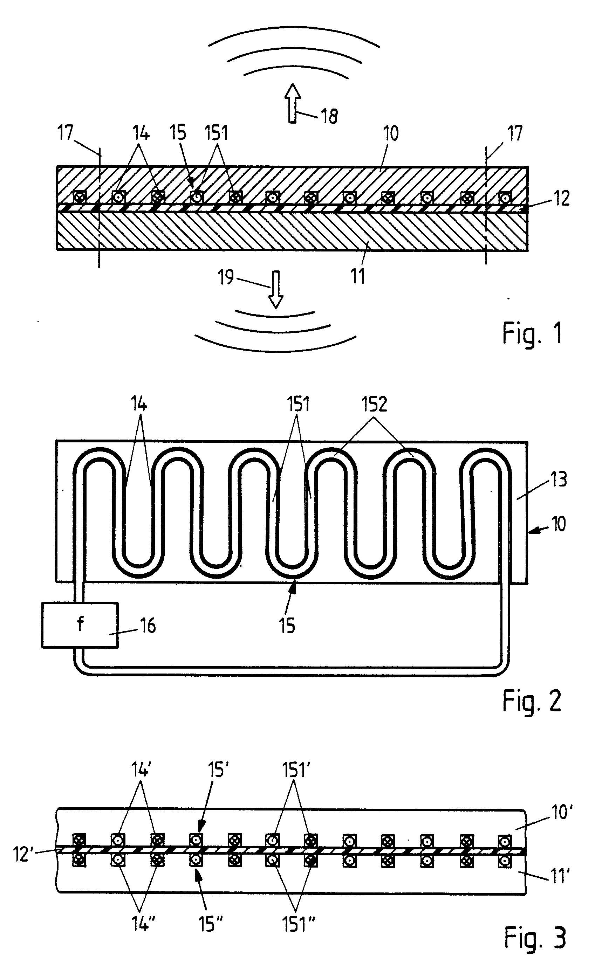

Der in Fig. 1 im Querschnitt schematisch dargestellte Sendewandler für eine herkömmliche Sonaranlage als Beispiel eines elektroakustischen Wandlers für Wasserschall weist eine Rückschlußplatte 10 und eine Ankerplatte 11 auf, die beide aus Eisen oder einem anderen ferromagnetischen Material mit hoher relativer Permeabilitätszahl bestehen. Beide Platten 10, 11 weisen in etwa die gleichen Abmessungen auf und liegen aufeinander, wobei sie durch eine elastische Zwischenschicht 12 aus druckfestem, weichen Werkstoff voneinander getrennt sind. Die der Ankerplatte 11 bzw. der Zwischenschicht 12 zugekehrte Plattenfläche 13 der Rückschlußplatte 10 trägt eine Vielzahl von parallelen Nuten 14, die sich im Abstand voneiander über nahezu die gesamte Breite der Rückschlußplatte 10 erstrecken. In den Nuten 14 liegt eine Erregerwicklung 15 ein, und zwar derart, daß die Stromrichtung in jeder Nut 14 gegenüber der Stromrichtung in den beiden benachbarten Nuten 14 um 180° gedreht ist. Hierzu ist die als Einschichtwicklung mit einem Leiter 151 pro Nut 14 ausgeführte Erregerwicklung 15 mäanderförmig durch aufeinanderfolgende Nuten 14 hindurchgeführt und endseitig an einer Ansteuervorrichtung 16 angeschlossen, welche die Erregerwicklung 15 mit einem Wechselstrom der Frequenz f versorgt. Die Abmessung der Rückschlußplatte 10 in Richtung der Nuterstreckung ist größer gewählt als die axiale Nutlänge, und der Nutverlauf ist im Bereich der die Leiter 151 verbindenden Wicklungsköpfe 152 der Erregerwicklung 15 an deren Mäanderform angepaßt, so daß die gesamte Erregerwicklung 15 in Eisen eingebettet ist und damit die Stromverluste klein gehalten werden. Die Rückschlußplatte 10 und die Ankerplatte 11 sind mechanisch miteinander verbunden, z. B. durch Schraubenverbindungen 17, die in Fig. 1 strichpunktiert angedeutet sind, und die eine geringe Bewegung der Ankerplatte 14 in Richtung ihrer Flächennormalen zulassen. Als Werkstoff für die Zwischenschicht ist ein elektrisch und magnetisch nichtleitendes Material gewählt, dessen Elastizität sehr viel größer als die Elastizität der Rückschluß-und Ankerplatte 10, 11 ist. Im Ausführungsbeispiel ist ein Kunststoff mit einem Elastizitätsmodul von etwa $10^8$ kg · m $^{-1}$ · sec $^{-2}$ verwendet.

Bei einem brauchbaren, wie vorstehend beschriebenen Sendewandler weisen die Rückschlußplatte 10 und die Ankerplatte 11 jeweils eine Länge von 3 m und eine Breite von 0,5 m auf. Die Dicke der Zwischenschicht beträgt 0,2 mm. Die Erregerwicklung 15 wird mit einer Wechselspannung von 756 V und einem Wechselstrom von 140 A bei 500 Hz Angesteuert. Überschlägige Berechnungen ergeben eine akustische Sendeleistung von 30 kW bei einer elektrischen ansteuerleistung (Scheinleistung) von etwa 100 kVA. Der Schallpegel beträgt 230 dB rel 1 µPa, 1 m. Die Schallausbreitung des vom Sendewandler erzeugten Schallfeldes erfolgt in zwei Richtungen, und zwar jeweils in Richtung der Flächennormalen der außen liegenden Plattenflächen von Rückschlußplatte 10 und Ankerplatte 11, wie dies in Fig. 1 durch die Pfeile 18 und 19 angedeutet ist.

In Fig. 3 ist ein weiteres Ausführungsbeispiel eines Sendewandlers im Querschnitt dargestellt. Dieser weist zwei Platten 10' und 11' auf, die identisch und jeweils wie die Rückschlußplatte 10 in Fig. 1 und 2 ausgebildet sind. Jede Platte 10' bzw. 11' trägt Nuten 14' bzw. 14", die gleich den Nuten 14 in Fig. 1 und 2 ausgebildet sind, und eine Erregerwicklung 15' bzw. 15". Die beiden Platten 10', 11' liegen mit ihren die Nuten 14' bzw. 14" enthaltenden Plattenflächen unter Zwischenlage der gleichen Zwischenschicht 12' aus druckfestem, weichen Kunststoff aufeinander, wobei die Nuten 14' bzw. 14" deckungsgleich zueinander liegen. Die beiden identisch ausgebildeten Erregerwicklungen 15' und 15" werden mit einem Wechselstrom der Frequenz f gespeist und gleichsinnig von dem Erregerstrom durchflossen, so daß die Stromrichtung in kongruenten Nuten 14', 14" gleich sind. Der in Fig. 3 im Querschnitt skizzierte Sendewandler ist damit spiegelsymmetrisch aufgebaut, wobei die Symmetrieebene in der Zwischenschicht 12' verläuft. Ein solcher Sendewandler zeigt eine gleiche Abstrahlung in beiden Senderichtungen, also in Richtung der Flächennormalen, was allerdings auch bei dem Sendewandler gemäß Fig. 1 und 2 durch entsprechende Dimensionierung der Platten 10 und 11 erreicht werden kann.

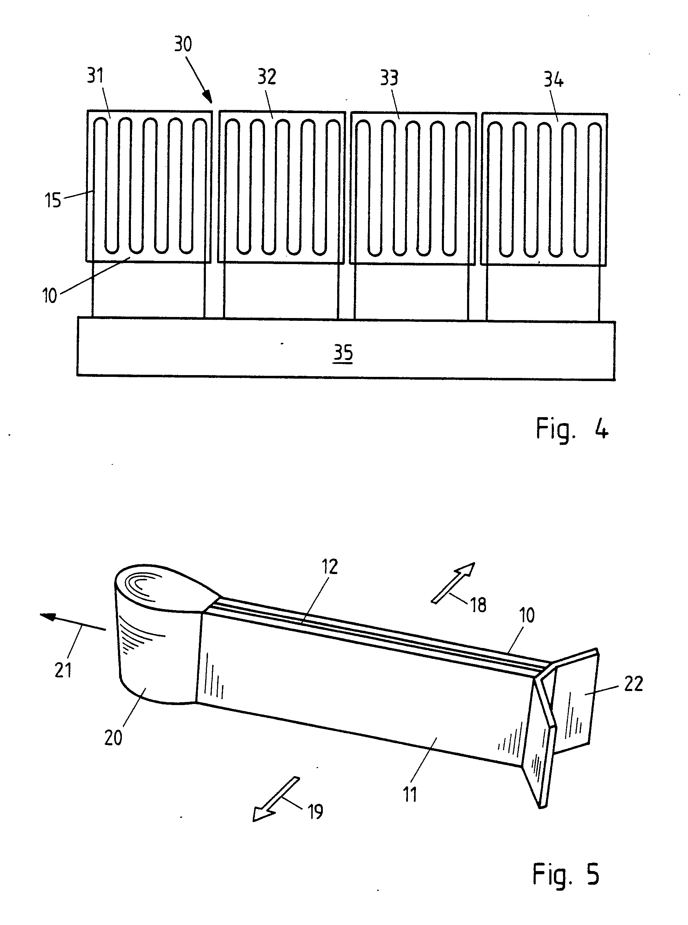

Die Sendewandler in Fig. 1 und 2 bzw. Fig. 3 können bei entsprechender Flächendimensionierung der Platten 10, 11 bzw. 10', 11' unmittelbar als Flachbasis für eine Sonaranlage verwendet werden. Mehrere dieser Sendewandler können aber auch zu einer Basis, einem sog. Array, vereinigt werden. Ein solches Array 30 ist in Fig. 4 schematisch dargestellt. Es besteht z. B. aus vier Sendewandlern 31 bis 34, die alle identisch dem in Fig. 1 und 2 dargestellten Sendewandler aufgebaut sind. In Fig. 4 ist jeweils eine Unteransicht der Rückschlußplatten 10 mit in den Nuten einliegender Erregerwicklung 15 zu sehen. Die Erregerwicklung 15 der Sendewandler 31 bis 34 werden von einer Ansteuervorrichtung 35 getrennt mit Wechselstrom der Frequenz f versorgt. Zum Schwenken der Richtcharakteristik werden die einzelnen Erregerwicklungsströme gegeneinander phasenverschoben. Zur Erzielung eines Schwenkwinkels von 0°, also einer Richtcharakteristik mit einer senkrecht auf der Ebene des Array 30 stehenden Hauptkeule, sind alle Erregerwicklungsströme gleichphasig. Die einzelnen Sendewandler 31 bis 34 können sowohl in einer Ebene als auch auf einem Zylindermantel angeordnet werden.

In Fig. 5 ist der in Fig. 1 und 2 oder 3 dargestellte Sendewandler in seiner Konfiguration als Schleppantenne skizziert. Der Sendewandler wird in vertikaler Ausrichtung im Wasser geschleppt, so daß er etwa in der Horizontalebene mit schmaler Richtcharakteristik abstrahlt. Am vorderen Ende ist ein Schleppwulst 20 vorgesehen, an dem das Schleppseil angreift. Die Schlepprichtung ist durch 21 gekennzeichnet. Am gegenüberliegenden Ende sind Stabilisierungsflossen 22 vorgesehen, die den Sendewandler in seiner aufrechten vertikalen Lage während des Schleppbetriebs halten.

**Ansprüche**

1. Elektroakustischer Wandler für Wasserschall, insbesondere Sendewandler, gekennzeichnet durch zwei unter Zwischenlage einer elastischen Zwischenschicht (12, 12') aus druckfestem weichen Werkstoff aufeinanderliegenden Platten (10, 11, 10', 11') aus ferromagnetischem Material, von denen mindestens eine in ihrer der Zwischenschicht (12, 12') zugekehrten Plattenfläche (13) eine Vielzahl von im Abstand voneinander angeordneten parallelen Nuten (14, 14', 14") trägt, und durch eine Erregerwicklung (15, 15', 15"), die in den Nuten (14, 14', 14") derart einliegt, daß die Stromrichtung eines in der Erregerwicklung (15, 15', 15") fließenden Erregerstroms in benachbarten Nuten (14, 14', 14") entgegengesetzt verläuft.

2. Wandler nach Anspruch 1, dadurch gekennzeichnet, daß die Platten (10, 11, 10', 11') rechteckig ausgebildet sind und die Nuten (14, 14', 14") im wesentlichen parallel zu einer Erstreckungsrichtung der Platten (10, 11, 10', 11') verlaufen.

3. Wandler nach Anspruch 1 oder 2, dadurch gekennzeichnet, daß die Erregerwicklung (15, 15', 15") als mäanderförmig gewickelte Einschichtwicklung mit einem Leiter (151, 151', 151") pro Nut (14, 14', 14") ausgebildet ist.

4. Wandler nach Anspruch 3, dadurch gekennzeichnet, daß die Abmessungen der Platten (10, 11, 10', 11') in Nutrichtung größer gewählt ist als die axiale Nutlänge und der Verlauf der Nuten (14, 14', 14") in der mindestens einen Platte (10, 10', 11') der Mäanderform der Erregerwicklung (15, 15', 15") entspricht.

5. Wandler nach einem der Ansprüche 1 bis 4, dadurch gekennzeichnet, daß beide Platten (10', 11') zur Zwischenschicht (12') spiegelsymmetrisch ausgebildet sind und jeweils in kongruenten Nuten (14', 14") eine Erregerwicklung (15', 15") aufnehmen, und daß die Erregerwicklungen (15', 15") in den Nuten (14', 14") derart angeordnet sind, daß die Stromrichtung in kongruenten Nuten (14', 14") beider Platten (10', 11') identisch ist.

6. Wandler nach einem der Ansprüche 1 bis 5, dadurch gekennzeichnet, daß die Zwischenschicht (12, 12') aus Kunststoff besteht, deren Elastizität groß gegenüber der Elastizität der Platten (10, 11, 10', 11') ist.

7. Wandler nach einem der Ansprüche 1 bis 6, gekennzeichnet durch die Verwendung als Flachbasis einer Sonaranlage.

8. Wandler nach einem der Ansprüche 1 bis 6, gekennzeichnet durch die Verwendung als Schleppantenne einer Sonaranlage.

9. Wandler nach einem der Ansprüche 1 bis 6, gekennzeichnet durch die Verwendung als Element (31, 32, 33, 34) einer aus einer Mehrzahl von identischen Elementen (31, 32, 33, 34) zusammengesetzten Basis (Array 30) einer Sonaranlage.

Fig. 1

Fig. 2

Fig. 3

31  30  32  33  34

15

10

35

Fig. 4

12

18

21

10

20

22

19

11

Fig. 5